# EUROPEAN PATENT SPECIFICATION

(11) **EP 3 452 271 B1**
(45) Date of publication and mention of the grant of the patent: **04.09.2024**
(21) Application number: 17793346.2
(22) Date of filing: 04.05.2017
(51) Int. Cl.: B29C 64/129, B29C 64/165, B33Y 70/00, B33Y 80/00, B33Y 10/00

(54) **METHOD FOR FORMING A THREE-DIMENSIONAL BODY HAVING REGIONS OF DIFFERENT DENSITIES**
VERFAHREN ZUR HERSTELLUNG EINES DREIDIMENSIONALEN KÖRPERS MIT BEREICHEN MIT UNTERSCHIEDLICHER DICHTE
PROCÉDÉ DE FORMATION D'UN CORPS TRIDIMENSIONNEL AYANT DES RÉGIONS DE DENSITÉS DIFFÉRENTES

(30) Priority: 04.05.2016 US 201662331697 P
(43) Date of publication of application: 13.03.2019
(73) Proprietor: Saint-Gobain Ceramics&Plastics, Inc., Worcester, MA 01615 (US)
(72) Inventor: GACEK, Matthew, Rutland, Massachusetts 01543 (US); REHRIG, Paul W., Sterling, Massachusetts 01564 (US); SENDER, Michael, Cambridge, Massachusetts 02139 (US)
(74) Representative: Zimmermann & Partner Patentanwälte mbB
(86) International application number: PCT/US2017/031077
(87) International publication number: WO 2017/192859

(56) References cited:
- WO-A1-2015/195920
- US-A1- 2008 036 117
- US-A1- 2009 130 449
- US-A1- 2009 130 449
- US-A1- 2015 071 809
- US-B2- 8 057 731
- US-B2- 9 205 601
- US-B2- 9 205 601

## Description

### TECHNICAL FIELD

The present disclosure relates to a method for continuously forming a three-dimensional body from a mixture comprising solid particles, wherein the formed body contains regions of different densities.

The manufacturing of polymeric three-dimensional bodies based on a layer by layer built up of a radiation curable liquid material has become of increasing interest, especially in view of the enhancement in production speed if a bottom-up technique is employed.

Although it is known that ceramic bodies may also be manufactured via a layer by layer construction of radiation curable ceramic slurries, the production speed for making these materials is still very slow and improvement of the uniformity, density and strength of manufactured ceramic bodies is desirable. The manufacturing of complex three dimensional structures including ceramic particles can find applications in a wide range of fields, for example, in the automotive and aerospace industry, or in medicine for the making of custom implants and dental models. US 2009/130449 A1 relates to a process for producing a three-dimensional object, comprising: providing a material to be solidified, the material comprising a filler and a binder; delivering electromagnetic radiation and/or synergistic stimulation in a pattern or an image to a building region for solidifying said material. WO 2015/195920 A1 relates to methods and apparatus for the fabrication of solid three-dimensional objects from liquid materials. In order to further expand the use of three-dimensional bodies produced by a continuous printing technique, it would be desirable to manufacture three-dimensional bodies having regions of different densities by a single printing process.

### SUMMARY

The present invention refers to a method for forming a body as defined in claim 1. Said method comprises forming a three-dimensional body by radiation curing a mixture (16) comprising solid particles, wherein forming includes growth of the three-dimensional body from an interface (22) of the mixture (16), said interface (22) being between an inhibition zone (17) of the mixture (16) and the remaining part of the mixture (16), the inhibition zone (17) defined as a zone of the mixture (16) which is distinguished from the remaining part of the mixture (16) by the presence of an inhibitor in a concentration that avoids curing of the mixture (16) when exposed to radiation, and forming at least one first region and at least one second region within the three-dimensional body by varying the thickness of the inhibition zone (17) and/or translating portion (19), such that solid particles of the mixture can be excluded according to their size from entering the translation portion (19); and wherein, the at least one first region having a different density than the at least one second region with a difference in density being at least 0.05 g/cm³; and
the at least one first region having a first content of the solid particles, and the at least one second region comprising a second content of the solid particles, the first content of the solid particles being different than the second content of the solid particles wherein the solid particles involved for forming the at least one first region have an average particle size (P1), and the solid particles involved for forming the at least one second region have an average particle size (P2), wherein P1>P2.

### BRIEF DESCRIPTION OF THE DRAWINGS

The present disclosure may be better understood, and its numerous features and advantages made apparent to those skilled in the art by referencing the accompanying drawings.
FIG. 1A includes an illustration of an assembly according to one embodiment, showing the starting phase of forming of a three-dimensional body.
FIG. 1B includes an illustration of an assembly according to one embodiment, showing a later phase of forming of a three-dimensional body.
FIG. 2A includes an illustration of a three-dimensional body comprising two different regions according to one embodiment.
FIG. 2B includes an illustration of a three-dimensional body comprising three different regions according to an embodiment.
FIG. 3 is a graph showing the cure depth with increasing UV exposure of mixtures containing each a different type of ceramic particles and of a mixture without ceramic particles.
FIG. 4 is a graph showing the thickness of the inhibition zone in dependence to the UV exposure of a mixture containing ceramic particles according to an embodiment and a mixture without ceramic particles.
FIG. 5 is a graph comparing two types of oxygen permeable membranes with regard to the thickness of an inhibition zone formed during varying UV exposure according to embodiments.
FIG. 6 is an image of a continuously formed three-dimensional body comprising alumina particles.
FIG. 7 is an image comparing continuously formed three-dimensional bodies comprising alumina particles.
FIG. 8 is an image of two three dimensional bodies each having regions of different densities according to one embodiment.
FIG. 9 is a scanning electron microscope (SEM) image showing the microstructure of two adjacent regions of a three-dimensional body with different densities according to one embodiment.

### DETAILED DESCRIPTION OF THE PREFERRED EMBODIMENT(S)

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus.

As used herein, and unless expressly stated to the contrary, "or" refers to an inclusive- or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

As used herein, the term mixture refers to a fluid of a certain viscosity, including a liquid component and solid particles. The liquid component may include a radiation curable material.

As used herein, the term solid particles refers to particles that remain solid in the mixture and do not dissolve in the liquid component of the mixture. For example, solid particles may be ceramic particles, metallic particles, polymeric particles or any combination thereof.

As used herein, the term three-dimensional body refers to a body formed from the mixture of the present disclosure before high temperature sintering, unless indicated otherwise. All values provided in the embodiments herein and related to the three-dimensional body refer to the three-dimensional body after stabilization. Stabilization includes removal of volatiles from the three-dimensional body, including for example drying of the three-dimensional body at a temperature up to 100°C.

Various embodiments of the present disclosure will now be described, by way of example only, with reference to the accompanying drawings.

The present disclosure relates to a method of continuously forming a three-dimensional body from a mixture. The method of the present disclosure can form a three-dimensional body having at least one first region and at least one second region, whereby the at least one first region and at least one second region can be different from each other based upon one or more criteria, including but not limited to, density, content of particles, and average particle size.

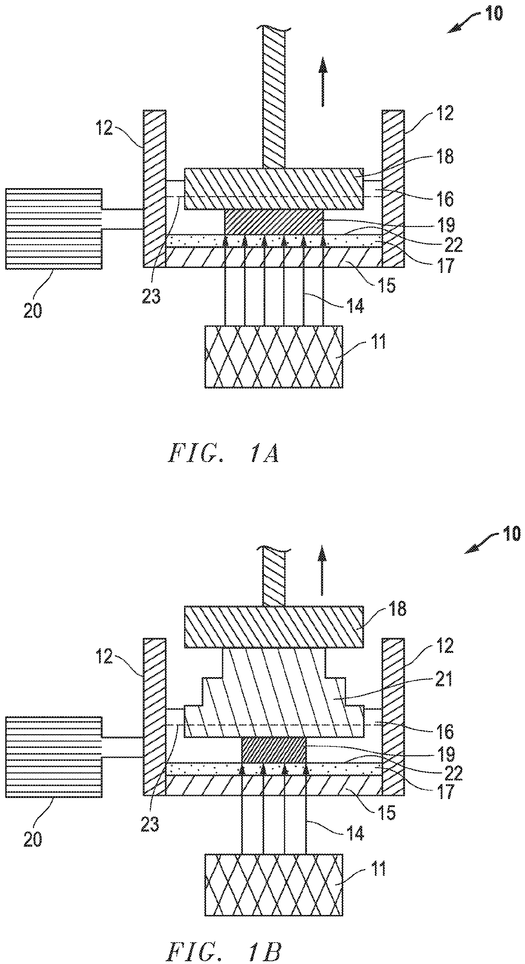

The method includes providing an assembly designed for working with a radiation curable mixture containing solid particles. As demonstrated in the embodiment shown in **FIG.** 1**A**, the assembly can have a computer controlled electromagnetic radiation unit **(11)**, a chamber **(12)**, and a construction unit **(13).** The electromagnetic radiation unit **(11)** can be configured to deliver electromagnetic radiation to a portion of the mixture, wherein the electromagnetic radiation can have a particular wavelength, including for example an ultraviolet radiation (UV) or visible light. The assembly can include a radiation source **(14)**, for example, a laser or a light emitting diode (LED), which can be configured to project a varying computer-aided design / computer-aided manufacturing (CAD/CAM) created two-dimensional image onto a transparent window **(15)** at the bottom of the chamber **(12).** The chamber **(12)** can include a mixture **(16)** that can include a radiation curable material and solid particles. The transparent window **(15)** of the chamber **(12)** can be semipermeable for a particular inhibitor, which may be a gaseous material. In such instances, the semipermeable layer is selectively permeable, such that it is configured to allow for the transfer of the inhibitor into the mixture, but may not allow transfer of other materials (e.g., water) through the transparent window **(15).** The transparent window **(15)** may include an additional semipermeable layer (not shown) for the penetration of an inhibitor, for example air or oxygen, into the mixture **(16)** of the chamber **(12).** During the forming process, the inhibitor may enter the chamber **(12)** by permeating the transparent window **(15)** and form an inhibition zone **(17)** at a bottom region of the mixture **(16).** In the inhibition zone **(17)** the inhibitor can limit or prevent curing of the mixture **(16)** by the electromagnetic radiation.

According to one embodiment, a carrier plate **(18)** can be positioned above the chamber **(12).** The position between the carrier plate **(18)** and the mixture in the chamber **(12)** can be changed during the forming process to facilitate formation of the three-dimensional body. When the formation of the three-dimensional body is started, the carrier plate **(18)** can be emerged into the mixture **(16)** up to a pre-calculated distance from the interface of the inhibition zone **(22).** According to one embodiment, the pre-calculated distance corresponds to a portion of the mixture that can be radiation cured (translated from liquid to solid state) if subjected to electromagnetic radiation from the radiation unit **(11)** underneath the chamber **(12)**, and is furtheron called "translating portion" **(19).** The radiation cured translating portion **(19)** can be adhered to the carrier plate **(18)** and can be vertically moved away from the interface of the inhibition zone **(22).** Concurrently with the upwards movements of the carrier plate **(18)** and the attached solidified translating portion **(19)**, mixture **(16)** from the sides of the polymerization chamber or from a reservoir **(20)** can fill the released space. The construction is designed to move the carrier plate **(18)** continuously upwards in vertical direction (i.e., Z-direction) at a speed that corresponds to the time needed for radiation curing mixture **(16)** that replaces the upwards moved solidified translating portion.

**FIG. 1B** includes an illustration of a partially formed three-dimensional body according to an embodiment. The partially formed body includes three solidified and unified translating portions **(21)** and one translating portion **(19)** which is subjected to radiation curing.

The increase in distance between the carrier plate **(18)** and the mixture **(16)** when forming the three-dimensional body can be caused by moving either the carrier plate **(18)** or the chamber **(12)** or both carrier plate **(18)** and chamber **(12)** in relation to each other.

The carrier plate **(18)** of the assembly may be configured for continuous movement to facilitate formation of the three-dimensional body as the carrier plate (18) is moved away from the interface of the inhibition zone **(22).** As used herein, the phrase "interface of the inhibition zone" **(22)** can be used interchangeably with the phrase "interface of the mixture," since the inhibition zone is a zone of the mixture, which is only distinguished from the other part of the mixture by the presence of an inhibitor in a concentration that the mixture may not cure if exposed to electromagnetic radiation. Actual solidification and forming of the three-dimensional body starts at the interface of the inhibition zone **(22)**, i.e., an interface of the mixture.

The formation of the three-dimensional body may not necessarily be considered a layer-by-layer forming process. Instead, the forming process (e.g., curing) may be in the form of a gradient of solidification (e.g., polymerization). The processes of the embodiments herein may facilitate formation of a three-dimensional body having smoother features and may have improved mechanical properties, compared to conventional structures formed by a layer-by-layer forming processes.

As used in the context of the present disclosure, continuous translation and growth of the three-dimensional body means that the carrier plate **(18)** can be moved in a continuous manner or in discrete steps with short stops between each step. In certain instances, the continuous translation and growth will be characterized by a gradient of solidification that is maintained while forming the three-dimensional body. A gradient of solidification means that a continuous polymerization reaction is maintained across the thickness of the translating portion **(19)**, with the lowest degree of solidification next to the interface of the inhibition zone **(22)** and the greatest degree of solidification at the opposite end across the thickness of the translating portion **(19).** The three-dimensional body formed by the process of continuous translation can thereby possess a non-layered internal structure, such that in a crosscut along the z-axis, changes in the morphology of the three-dimensional body are not visible to the naked eye. In comparison, traditional layer by layer build-up of a three-dimensional body waits until one layer is completely radiation cured before the next layer is applied, which leaves visible lines and discrete regions in the formed three-dimensional body, i.e., regions that are not smoothly connected together.

In those embodiments utilizing short stops in the movement of the carrier plate **(18)**, such stops are generally brief and suitable for maintaining the above-described gradient of solidification. According to one embodiment, the stops can be for a duration of at least 1 microsecond, such as at least 300 microseconds, at least 500 microseconds, at least 800 microseconds or even at least 1000 microseconds. In other embodiments, the stops may be for a duration of not longer that 1 second, such as not longer than 0.5 seconds, not longer than 0.3 seconds or not longer than 0.2 seconds or even not longer than 0.1 seconds. It will be appreciated that the stops can have a duration within a range including any of the minimum and maximum values note above, such as from 1 microsecond to 1 second or from 300 microseconds to 0.5 seconds or from 1000 microseconds to 0.1 seconds.

In further embodiments, the method of the present disclosure can also include longer stops during the forming of the three-dimensional body, such that the gradient of solidification may be interrupted and the translation is not continuous as defined above. Such longer stops may be desired for the making of a body having defined regions which are cleavable.

To produce a three-dimensional body having at least one first region and at least one second region that can differ from each other based upon density, the solid particle content (i.e., the amount of solid particles in vol% or wt%), or the average size of the solid particles, the thickness of the inhibition zone **(17)** and/or the thickness of the translating portion **(19)** may be varied. By varying the thickness of the inhibition zone **(17)** and/or translating portion **(19)**, solid particles of the mixture can be excluded according to their size from entering the translating portion **(19).**

In one embodiment, the solid particles of the mixture involved for forming at least one first region can comprise a greater average particle size than the solid particles involved for forming at least one second region.

The inhibition zone **(17)** can be a part of the mixture and located next to the transparent window **(15)** of the chamber, where the mixture does not cure or only to a very limited extend under electromagnetic radiation. Accordingly, the inhibition zone **(17)** may facilitate limited or no adhesion of the radiation cured material to the bottom of the chamber **(12)**, which may facilitate simpler release of the body from the chamber after forming is completed.

The inhibition zone **(17)** can be formed when the inhibitor enters the chamber **(12)** through the transparent and semipermeable window **(15)**, and may be regulated in its thickness by the concentration of the inhibitor.

In one embodiment, the thickness of the inhibition zone **(17)** can be varied by varying the intensity of the applied electromagnetic radiation, as also shown in Examples 2 and 3.

In another embodiment, the thickness of the inhibition zone **(17)** can be varied by varying the pressure of a gaseous inhibitor for forming the inhibition zone.

In a further embodiment, the thickness dimension of the inhibition zone **(17)** can be controlled relative to the concentration of the solid particles. By increasing the concentration of the solid particles, the thickness of the inhibition zone may be decreased, as also shown in Example 2.

In one embodiment, the thickness of the inhibition zone may be at least 0.5 µm, such as at least 1.0 µm, at least 2.0 µm, or at least 5 µm. In another embodiment, the inhibition zone may not be greater than 600 µm, such as not greater than 500 µm, not greater than 300 µm, or not greater than 100 µm. It will be appreciated that the thickness of the inhibition zone can be a value between any of the maximum and minimum values noted above, such as from 0.5 µm to 600 µm, from 1.0 µm to 450 µm, or from 3 µm to 200 µm.

The inhibitor may preferably be an oxygen containing gas, such as air, mixtures of an inert gas and oxygen, or pure oxygen. In another aspect, when oxygen cannot inhibit the activity of the photoinitiator (for example, when a cationic photoinitiator is used) the inhibitor can be an amine, e.g., ammonia, ethyl amine, di and trialkyl amines, carbon dioxide, or combinations thereof.

In one embodiment, the inhibitor can be pure oxygen, and the oxygen may penetrate the semipermeable layer in an amount of at least 0.1 Barrer, such as at least 1 Barrer, at least 5 Barrer, at least 10 Barrer, or at least 30 Barrer.

Although the term "inhibition zone" appears to indicate that no polymerization reaction may take place in that area of the mixture, it will be appreciated that polymerization reactions can also occur to a limited extent in the inhibition zone **(17).** The inhibition zone **(17)** may be also described as a gradient of polymerization, where with increasing distance from the bottom surface of the chamber larger amounts of polymerization reactions can happen, but these polymerization reactions may not completely cure the mixture, and the mixture is still maintained in a liquid stage. The interface of the inhibition zone **(22)** may be understood as the area of the inhibition zone **(17)** where the polymerization reactions starts to form a solid material.

Varying the thickness of the translating portion **(19)** can include adjusting the position of the carrier plate **(18)** onto which the three-dimensional body is attached relative to the interface of the inhibition zone **(22).**

The solid particles contained in the mixture can be any type of inorganic or organic particles that do not dissolve in the liquid component of the mixture and may be uniformly distributed throughout the entire mixture. In one aspect, the solid particles can be ceramic particles, metallic particles, polymeric particles, or any combination thereof. In embodiments, the solid particles may have a certain porosity, for example, an open or closed porosity, interconnected pores, or internal voids.

In a particular embodiment, the solid particles can be ceramic particles, such as an oxide, a carbide, a boride, a nitride, a silicide or any combination thereof. Non-limiting examples of ceramic particles can be alumina, ceria, zirconia, silica, magnesium-magnesia aluminate (MMA), magnesium oxide , silicon nitride, silicon carbide, hydroxyapatite, corderite, or any combination thereof.

The solid particles contained in the mixture can have an average particle size of at least 0.1 µm, such as at least 0.3 µm, at least 0.5 µm, at least 1.0 µm, at least 3 µm, or at least 5 µm. In another aspect, the solid particles can have an average particle size of not greater than 50 µm, such as not greater than 40 µm, not greater than 30 µm , not greater than 25 µm, not greater than 20 µm, not greater than 18 µm, not greater than 15 µm, or not greater than 10 µm. It will be appreciated that the average size of the solid particles can be a value between any of the maximum and minimum values noted above, such as from 0.1 µm to 50 µm, 0.3 µm to 25 µm, or 0.5 µm to 20 µm.

In another embodiment, the solid particles contained in the mixture may have an average particle size controlled relative to the thickness dimension of the inhibition zone. In a preferred aspect, an average particle size of the solid particles may not be greater than 25% of the thickness of the inhibition zone, such as not greater than 20%, not greater than 15%, or not greater than 10% of the thickness of the inhibition zone.

In one embodiment, the solid particles may have a multimodal particle size distribution, for example, a bimodal, trimodal, or tetramodal particle size distribution. As used herein, a multimodal particles size distribution relates to a batch of solid particles, wherein the particle sizes spread over a particle distribution curve with more than one maximum (more than one mode), and may include at least two particle size maxima (bimodal distribution). For example, the solid particles can relate to a combination of batches of solid particles, wherein each batch has a specific unimodal particle distribution, and the combination of batches may form a combined batch of solid particles having a multimodal particle distribution.

In yet another embodiment, the solid particles may have a particle size distribution wherein a value of function (d50-d10)/d50 is less than 0.8. In another embodiment, the solid particles may have a particle size distribution wherein a value of function (d90-d50)/d50 is less than 1.0.

The solid particles involved for forming the at least one first region can have an average particle size (P1), and the solid particles involved for forming the at least one second region have an average particle size (P2), wherein P1>P2. In particular embodiments, the ratio of P1:P2 can be at least 1.2:1, such as at least 1.5:1, at least 2:1, at least 5:1, at least 10:1, or at least 20:1. In another embodiment, the ratio P1:P2 may be not greater than 1000: 1, such as not greater than 900:1, not greater than 750:1, not greater than 500:1, not greater than 300: 1, not greater than 200:1, not greater than 100:1, or not greater than 50:1. It will be appreciated that the ratio P 1:P2 can be a value between any of the minimum and maximum values noted above, such as from 1.2:1 to 1000:1, from 5:1 to 500:1, or from 10:1 to 250:1.

The forming of different regions of the three-dimensional body of the present disclosure may not be limited to size exclusion of solid particles entering the translating portion **(19)**, but can be regulated also according to the magnetic or metallic properties of the solid particles of the mixture. For example, in one embodiment, magnetic manipulation can be applied as a method of selectively collecting a preferred type of magnetic particles in the translating portion **(19).** In another embodiment, electrostatic manipulation can be used to collect a preferred type of metal particles in the translating portion **(19).** In one aspect, when conducting magnetic manipulation, at least one first region can consist essentially of magnetic particles, and at least one second region can be essentially free of magnetic particles, wherein essentially free of magnetic particles means not more than 1 vol% of magnetic particles based on the total volume of the region. In another aspect, when applying electrostatic manipulation of the mixture, at least one first region may consist essentially of metal particles, and at least one second region may be essentially free of metal particles, wherein essentially free of metal particles means not more than 1 vol% of metal particles based on the total volume of the region.

In one embodiment, the solid particles contained in the mixture can include a coating overlying an exterior surface of the particles. The coating can partially or completely cover the surface of the solid particles. The coating may be desirable in order to adjust the scattering and/or absorption of an applied electromagnetic radiation in the mixture. In one aspect, the coating can provide a 50% lower scattering of an applied electromagnetic radiation than corresponding uncoated particles. In a further aspect, the coating can lower the radiation scattering by at least 55%, such as at least 60%, at least 70%, at least 80%, at least 90% or at least 95%.

In another aspect, a coating of the solid particles can provide a 50% lower absorbance of an applied electromagnetic radiation absorption than corresponding uncoated particles. In embodiments, the coating can lower the radiation absorbance in the mixture by at least 55%, such as at least 60%, at least 65%, at least 70%, at least 75%, at least 80%, at least 90% or at least 95%.

The content of the solid particles in the mixture can be in a range that a percolated network be formed and that the created three-dimensional body can be densified without falling apart upon burnout of the binder. In one embodiment, the content of solid particles can be at least 7 vol%, such as at least 10 vol%, at least 15 vol%, at least 16 vol%, at least 18 vol%, at least 20 vol%, at least 25 vol%, or at least 30 vol% based on the total volume of the mixture. In another embodiment, the particle content can be not greater than 80 vol%, such as not greater than 75 vol%, not greater than 70 vol%, or not greater than 65 vol%. It will be appreciated that the content of solid particles can be a value between any of the maximum and minimum values noted above, such as from 7 vol% to 80 vol %, from 20 vol% to 75 vol%, from 30 vol% to 65 vol%, or from 20 vol% to 40 vol% based on the total volume of the mixture.

The radiation curable material contained in the mixture can comprise polymerizable monomers, polymerizable oligomers and one or more photoinitiators. In a preferred aspect, the radiation curable material can contain polymerizable monomers and at least one photoinitiator. Suitable polymerizable monomers can be, for example, acrylates, acrylamides, urethanes, dienes, or combinations thereof.

The photoinitiator can be a free-radical photoinitiator or a cationic photoinitiator. In a preferred aspect, a free-radical photoinitiator can be employed, which can be inhibited by the presence of oxygen. Non-limiting examples of free-radical photoinitiators can include peroxides, such as acetyl, benzoyl, t-butyl peroxides, ketones or phosphine oxides, such as IRGACURE^{™} 819 (bis(2,4,6-trimethylbenzoyl)-phenylphosphineoxide), ESSTECH TPO (2,4,6-trimethylbenzoyl)-phenylphosphineoxide) or a combination thereof.

In an embodiment where a cationic photoinitiator is used, the photopolymerization generally tends to be slower and cannot be inhibited by oxygen. In this aspect, instead of oxygen as inhibitor, a Bronsted acid or Lewis acid, such as metal halides and their organometallic derivatives can be employed and released from the bottom window of the polymerization chamber to form an inhibition zone.

The mixture comprising the solid particles and the radiation curable material can be subjected to electromagnetic radiation having a wavelength in a range from 200 nm to 760 nm, depending from the activation energy of the selected photoinitiator. In a preferred aspect, the range of the electromagnetic radiation may be from 370 nm to 450 nm, or from 380 nm to 410 nm.

In embodiments, the electromagnetic radiation can be created by a laser, a light emitting diode (led), or by electron beam radiation.

In one embodiment, the electromagnetic radiation applied for curing the mixture can have an energy of at least 1 mJ/cm², such as at least 5 mJ/cm², at least 10 mJ/cm², at least 20 mJ/cm², at least 30 mJ/cm², at least 50 mJ/cm² or at least 80 mJ/cm². In another embodiment, the electromagnetic radiation can have an energy not greater than 450 mJ/cm², such as not greater than 400 mJ/cm², not greater than 350 mJ/cm², not greater than 300 mJ/cm², not greater than 250 mJ/cm², not greater than 200 mJ/cm², or not greater than 100 mJ/cm². It will be appreciated that the electromagnetic radiation energy can be a value between any of the maximum and minimum values noted above, such as from 1 mJ/cm² to 450 mJ/cm², from 50 mJ/cm² to 300 mJ/cm², from 40 mJ/cm² to 200 mJ/cm², or from 20 mL/cm² to 100 mJ/cm².

In a particular embodiment, the method of the present disclosure may cure the mixture in the translating portion **(19)** during continuous forming of the three dimensional body at a UV power of at least 0.1 mW/cm², such as at least 0.5 mW/cm², at least 1.0 mW/cm², or at least 3.0 mW/cm². In another particular embodiment, the applied UV power during forming may be not greater than 250 mW/cm², such as not greater than 150 mW/cm², not greater than 100 mW/cm², not greater than 50 mW/cm², not greater than 30 mW/cm², not greater than 20 mW/cm², not greater than 13.0 mW/cm², not greater than 12 mW/cm², or not greater than 10 mW/cm². It will be appreciated that the applied UV power can be a value between any of the maximum and minimum values noted above, such as from 0.1 mW/cm² to 250.0 mW/cm², from 1.0 mW/cm² to 100 mW/cm² or from 2.0 mW/cm² to 10 mW/cm².

The electromagnetic radiation (1**4**) can cure the mixture (**16**) up to a certain distance throughout the mixture, hereinafter called the cure depth (**23**). The cure depth (**23**) may be effected by the size, type, and concentration of the solid particles and the refractive index of the particle slurry. Notably, the size and concentration of the solid particles may be particularly selected to facilitate proper operation of the process in combination with the type of electromagnetic radiation used for the curing process. In order to assure curing of the mixture throughout a thickness of the translating portion (**19**), the cure depth (**23**) can be controlled that it reaches a larger distance through the mixture in Z-direction from the transparent window (**15**) than the area of the translating portion (**19**), as shown in **FIG. 1A** and **1B****.**

In one embodiment, the cure depth (**23**) may reach at least 25% further than the thickness of the translating portion **(19)**, such as at least 30%, at least 35%, or at least 40%.

In one embodiment, the thickness of the translating portion **(19)** can be at least 1 µm, such as at least 3 µm, at least 5 µm, such as at least 10 µm, at least 15 µm, at least 20 µm, at least 30 µm, or least 50 µm. In another embodiment, the thickness of the translating portion may be not greater than 700 µm, such as not greater than 600 µm, not greater than 500 µm, not greater than 450 µm, or not greater than 400 µm. Thickness of the translating portion can be a value between any of the maximum and minimum values note above, such as from 1 µm to 700 µm, from 10 µm to 650 µm, from 50 µm to 350 µm, or from 5 µm to 50 µm.

In one embodiment, the mixture can contain at least 20 vol% to 40 vol% ceramic particles and may be radiation cured with UV radiation having an energy of at least 30 mJ/cm² and not greater than 200 mJ/cm².

According to another embodiment of the present disclosure, the mixture may include one or more additives. Non-limiting examples of additives can be additional inhibitors to prevent spontaneous polymerization (inert dyes), plasticizer, dispersing agents, debinding accelerators, cross-linking monomers, pH regulators, a pharmaceutically active ingredient, or any combination thereof.

The rheological properties of the mixture containing solid particles and a radiation curable material may be controlled to facilitate suitable formation of a stable and suitably formed three-dimensional body, including for example, a ceramic three-dimensional body having sufficient strength to be self-supporting and capable of handling without detrimental deformation. Also, the force required to continuously pull-up the carrier the force utilized to pull the carrier plate away from the chamber may be adjusted based on various parameters, including but not limited to the rheology of the mixture.

In a particular embodiment, the mixture used for forming the three dimensional body according to the present disclosure can be characterized that the viscosity of the mixture decreases with increasing shear rate. Such type of mixture is also called herein a shear thinning slurry. In certain embodiments, the decrease of the viscosity of the mixture from a shear rate of 0.1 s⁻¹ to a shear rate of 500 s⁻¹ can be at least 10 cP, such as at least 30 cP, at least 50 cP, or at least 80 cP. In other embodiments, the decrease in viscosity from a shear rate of 0.1 s⁻¹ to a shear rate of 500 s⁻¹ may be not greater than 1500 cP, such as not greater than 1200 cP, not greater than 1000 cP, or not greater than 800 cP. It will be appreciated that the decrease in viscosity from a shear rate of 0.1 s⁻¹ to a shear rate of 500 s⁻¹ may be a value within any of the maximum and minimum values noted above, such as from 10 cP to 1500 cP, from 50 cP to 700 cP, or from10 cP to 100 cP.

In another aspect, the yield point of the mixture may be less than 10 Pa, such as less than 8 Pa, less than 5 Pa, or less than 3 Pa at room temperature.

In a further aspect, the mixture may have a low shear viscosity to prevent particle settling over the duration of the forming of the three-dimensional body. Furthermore, the solid particles contained in the slurry may be uniformly dispersed throughout the radiation curable material when electromagnetic radiation is conducted such that that the three-dimensional body can shrink uniformly during sintering. Non-uniform distribution of the solid particles may result in undesirable macro-structural or micro-structural features, including for example, undesirable porosity and the like. Under low shear rate may be understood a range of not greater about 5 Hz and at least about 0.001 Hz, with a corresponding viscosity from at least about 50 cP to not greater than about 50000 cP, particularly from at least 70 cP to not greater than 1500 cP.. In one aspect, the viscosity at a low shear rate of less than about 5 Hz can be at least 100 cP.

The viscosity at a moderate to high shear rate can enable sufficient spontaneous flow of the mixture between carrier plate and the bottom surface of the polymerization chamber. Under moderate to high shear rate may be understood a shear rate in a range from at least about 25 Hz and not greater than about 3000 Hz, with a corresponding viscosity of the mixture in a range of at least 1 cP and not greater than 1000 cP. In one aspect, the viscosity of the mixture at a moderate to high shear rate of greater than 25 Hz may be less than 1000 cP.

In one embodiment, the mixture may be formed such that the content of agglomerates of the solid particles is limited. In certain embodiments, the mixture can be essentially free of agglomerates of solid particles. Forming a mixture that has limited agglomerates can include heat treatment and milling of the solid particle powder before combining with the other components of the mixture. In embodiments, the solid particle powder can be heat treated at a temperature of at least 90°C, such as at least 100°C, or even at least 105°C.

Other mixing methods may be employed. The mixing process may be controlled to control the level of agglomeration. Moreover, over-mixing may result in degrading of the monomers and generating too much premature polymerization of the radiation curable resin.

According to one embodiment, the mixture may be essentially free of a dye. In this embodiment, the mixture may be formed with solid particles having the proper combination of concentration, average particle size, and coating on the solid particles. A mixture being essentially free of a dye relates to a dye concentration of less than 0.001 vol% based on the total volume of the mixture. In contrast, radiation curable mixtures which do not contain solid particles and are fully polymer-based, generally require a dye in order to control unwanted photopolymerization.

The total volume of the three-dimensional body created by the process of the present disclosure can be at least 0.1 mm³, such as at least 0.3 mm³, at least 0.5 mm³, or at least 1 mm³. If the process of the present disclosure employs a replenishable reservoir (**20**), as shown in **FIG. 1A and 1B**, the method does not have a specific upper limit of the total volume of the formed three-dimensional body. For example, in one embodiment, interconnected parts can be formed and directly fed into a furnish, whereby no specific upper limit of the body volume may exist.

The method of the present disclosure can continuously manufacture a three-dimensional body having different regions at a high production speed. In one aspect, the creating of the three-dimensional body can be completed at a speed rate of at least 25 mm/hr, such as at least 30 mm/hr, at least 40 mm/hr, at least 50 mm/hr, or at least 70 mm/hr.

In a certain embodiment, the solid particles contained in the mixture and involved in forming different regions of the three-dimensional body can be ceramic particles, for example, alumina, ceria, zirconia, silica, magnesia, silicon carbide, hydroxyapatite, corderite, or any combination thereof. The solid particles of the mixture are, however, not limited to ceramic particles. Other type of solid particles can be, for example, metallic particles, for example, silver or copper, or polymeric particles (as long they do not dissolve in the mixture

In one embodiment, all of the solid particles of the mixture can be of the same material and only differ by their particle size. For example, in a particular embodiment, all solid particles may be silica particles having a bimodal particle size distribution. As used herein, two materials are considered as the same material if they have the same chemical composition, however, the materials may relate to different batches or can be made by different manufacturers and may contain different degrees of impurities.

In another embodiment, the solid particles of the mixture can be of different types of materials. As used herein, two material are considered as different materials if they have a different chemical composition, regardless of any contained impurities, and each of the different material types can have a different average particle size. For example, the mixture can contain alumina particles with an average particle size of about 1 micron, and the mixture can further contain silica particles having an average particle size of about 10 microns.

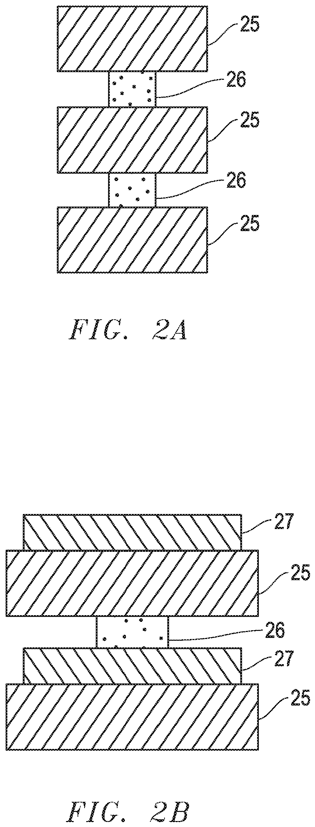

By varying the thickness of the inhibition zone and/or translating portion, a three-dimensional body is formed, as demonstrated in **FIG. 2A**, having at least one first region **(25)** including ceramic particles, and at least one second region **(26)** being essentially free of ceramic particles. The at least one second region **(26)** being essentially free of ceramic particles may function as a bridge between regions containing ceramic particles **(25).**

As described above, varying the thickness of the inhibition zone can be conducted, for example, by varying the applied radiation power. In one embodiment, by establishing a thickness I₁ of the inhibition zone (**17**), and a thickness T₁ of the translating portion (**19**), solid particles having a size larger then the thickness of the translating portion T₁ can be excluded from being integrated in the resin-cured mixture of the translating portion. By decreasing the thickness of the inhibition zone to a thickness I₂ by a distance x, with I₂ being (I₁ - x), e.g., by increasing the radiation power, and maintaining a constant speed of the carrier plate in Z-direction, this can allow to increase the thickness of the translating portion to T₂, corresponding to the decrease x in thickness of the inhibition zone by the distance x, with T₂ being (T₁ +x). The increase in thickness of the translating portion (**19**) from T₁ to T₂ can now allow solid particles being integrated in the forming of the radiation cured body which are larger than the thickness of T_{1,} as long the size of the solid particles is smaller than the thickness of T₂.

A three-dimensional body including ceramic-free bridges between ceramic-rich regions can be very useful for printing arrays of small ceramic bodies having a desired shape, for example abrasives. After high temperature sintering, the ceramic-free bridges can be completely removed, and additional machining to remove any stubs from the surface of the remaining ceramic parts may not be required.

High temperature sintering can be conducted at a temperature of at least 300°C, such as at least 400°C, at least 500°C, at least 700°C, at least 900°C, at least 1000°C, at least 1050°C, at least 1100°C, or at least 1150°C. In other aspects, the sintering temperature can be not greater than 1600°C, such as not greater than 1550°C, not greater than 1500°C, or not greater than 1400°C. The sintering temperature can be a value between any of the minimum and maximum values noted above, such as from 300°C to 1600°C, from 500°C to 1400°C, from 1000°C to 1500°C, or from 1100°C to 1350°C.

As used herein, a region of the three-dimensional body described as being essentially free of ceramic particles relates to a region where an amount of ceramic particles is too low to maintain its form after high temperature sintering. In certain embodiments, a region being essentially free of ceramic particles may include a ceramic particle content of not greater than 5 vol%, such as not greater than 4 vol%, not greater than 3 vol%, not greater than 2 vol%, not greater than 1 vol%, or not greater than 0.5 vol%, based on the total volume of the region. In other certain embodiments, essentially free of ceramic particles may include a ceramic particle content of at least 0.01 vol%, such as at least 0.05 vol%, or at least 0.1 vol% based on the total volume of the region.

In certain embodiments, a region of the three-dimensional body of the present disclosure can have a content of solid particles in an amount of at least 7 vol%, such as at least 8 vol%, at least 10 vol%, at least 15 vol%, at least 16, vol%, or at least 20 vol% based on the total volume of the region. In other embodiments, a region of the three-dimensional body may have a particle content not greater than 80 vol%, such as not greater than 75 vol%, not greater than 60 vol%, or not greater than 50 vol%. The content of solid particles in a region may be a value between any of the maximum or minimum values noted above, such as from 7 vol% to 80 vol%, from 10 vol% to 70 vol%, from 15 vol% to 50 vol%, or from 20 vol% to 40 vol% based on the total volume of the.

In aspects, a difference in the content of solid particles of a first region from a content of solid particles of a second region can be at least 1 vol%, such as at least 5 vol%, at least 10 vol%, or at least 20 vol%. In other aspects, the difference of a content of solid particles of a first region from a content of solid particles of a second region may be not greater than 75 vol%, such as not greater than 50 vol%, not greater than 40 vol%, or not greater than 30 vol%. The difference in the content of solid particles between a first region and a second region can be a value between any of the maximum and minimum values noted above, such as from 1 vol% to 75 vol%, from 3 vol% to 35 vol%, or from 10 vol% to 20 vol% based on the total volume of the respective regions.

In a particular embodiment, at least one region of the formed three-dimensional body may be free of ceramic particles, except unavoidable impurities, while at least one second region may include ceramic particles.

**FIG. 2B** demonstrates an embodiment of the present disclosure wherein a formed three-dimensional body contains three different regions, i.e., at least one first region (**25**), at least one second region **(26**), and least one third region (**27**); all three regions having different densities. Region **(25)** and region **(27)** can be distinguished by including solid particles with a different average particle size, and region **(26)** can be essentially free of solid particles.

After drying of the three-dimensional body to a stable weight up to a temperature not higher then 100°C, and before an optional high temperature sintering, a first region of the body differs in its density from a second region of the body by at least 0.05 g/cm³, such as at least 0.1 g/cm³, at least 0.15 g/cm³, at least 0.2 g/cm³, at least 0.3 g/cm³, or at least 0.5 g/cm³. In other embodiments, the density difference between two regions may be not greater than 11 g/cm³, such as not greater than 10 g/cm³, not greater than 8 g/cm3, not greater than 6 g/cm³, not greater than 5 /cm³, not greater than 4 g/cm³, not greater than 3 g/cm³, not greater than 2 g/cm³, or not greater than 1 g/cm³. The density difference between two regions can be a value between any of the minimum and maximum values noted above, such as from 0.05 g/cm³ to 11 g/cm³, from 0.1 g/cm³ to 6 g/cm³, or from 0.15 g/cm³ to 1 g/cm³.

In other aspects, the density of a region of the three-dimensional body formed by the method of the present disclosure before high temperature sintering can be at least 0.5 g/cm³, such as at least 0.8 g/cm³, at least 1.1 g/cm³, at least 1.3 g/cm³, at least 1.5 g/cm³, or at least 2.0 g/cm³. In yet further aspects, the density of a region can be not greater than 12 g/cm³, such as not greater than 10 g/cm³, not greater than 8 g/cm³, not greater than 6 g/cm³, not greater than 5.5 g/cm³, not greater than 4.5 g/cm³, not greater than 4 g/cm³, or not greater than 3 g/cm³. The density of a region can be a value between any of the minimum and maximum values noted above, such as from 0.5 g/cm³ to 12 g/cm³, from 1 g/cm³ to 6 g/cm³, from 1.1 g/cm³ to 4 g/cm³, or from 1.1 g/cm³ to 2 g/cm³. In a particular embodiment, the density of a region of the three-dimensional body before high temperature sintering can be at least 1.2 g/cm³ and not greater than 6.0 g/cm³.

After high temperature sintering, the density of a region of the sintered body can be in certain embodiments at least 0.02 g/cm³, such as at least 0.1 g/cm³, at least 0.3 g/cm³, at least 0.5 g/cm³, at least 0.8 g/cm³, at least 1.0 g/cm³, at least 1.5 g/cm³, or at least 2.0 g/cm³. In other embodiments, the density of a region of the sintered body may be not greater than 19 g/cm³, such as not greater than 15 g/cm³, not greater than 12 g/cm³, not greater than 10 g/cm³, not greater than 7 g/cm³, or not greater than 6 g/cm³. The possible variations of regions with varying densities and corresponding different particle size and content are countless.

In a particular embodiment, the sintered three-dimensional bodies having regions of different density can be ceramic bodies. Ceramic bodies having regions of variable densities can be used, for example, to control fracture in ceramic grains. Cracks can theoretically go through the less dense regions, which can be of use in engineered abrasive grains.

As further demonstrated in the Examples below, the present disclosure provides a unique method which allows the production of a three-dimensional body in a single forming process that can have regions of different densities and/or solid particle content and particle size at a fast forming speed.

Many different aspects and embodiments are possible. Some of those aspects and embodiments are described herein.

### Examples

The following non-limiting examples illustrate the present invention.

### Example 1

Example 1 demonstrates the change in cure depth of UV-radiation curable mixtures with different types of ceramic particles. The ceramic particle powders used in the experiments were alumina, zirconia, silica, magnesium-magnesia aluminate (MMA), silicon nitride, silicon carbide, and graphite.

Ceramic slurries were prepared for each type of ceramic powder using as radiation curable material for all samples 1,6 hexanediol diacrylate (SARTOMER^{™} SR238, hereinafter used as "monomer") and a photoinitiator (IRGACURE^{™} 819). A summary of the ceramic powder slurries used in the experiments can be seen in Table 1.

**Table 1:**

| | Type of solid particles | Aver. particle size | Spec. surface area | Amount of solid particles [vol%] | Amount of solid particles [wt.%] | Amount of monomer [wt.%] | Amount of photoinitiator [wt.%] | Amount of dispersant [wt.%] |
|---|---|---|---|---|---|---|---|---|
| E1 | - | - | | - | | | | |
| E2 | Al₂O₃ | 500 nm | 7 | 35 | 67.52 | 29.35 | 0.59 | 2.55 |
| E3 | ZrO₂ | 300 nm | 7 | 27.6 | 69.09 | 27.14 | 0.54 | 3.23 |
| E4 | SiO₂ | 1.7 µm | 2 | 30 | 51.49 | 45.79 | 0.91 | 1.81 |
| E5 | MMA | 3 µm | 1 | 28 | 57.89 | 38.11 | 0.76 | 3.23 |
| E6 | Si₃N₄ | 1.5 µm | 9 | 27.4 | 55.88 | 37.99 | 0.76 | 5.37 |
| E7 | SiC | 2 µm | 0.47 | 30 | 56.91 | 41.78 | 0.83 | 0.47 |

All mixtures E2 to E7 contained a dispersant which insured that the ceramic particles did not settle over a time period of at least 1 hour.

For the measurement of the cure depth, a chamber was filled with the mixture to be tested (E1 to E7), and the mixture was exposed to a static image made of a series of light dots, wherein the dots differed in their light intensity. The image was projected from a Digital Light Projector connected to a UV lamp (405 nm). The light intensity of each dot was controlled by scaling down the [R G B] intensity of the dots directly on the image. For most curing experiments, the power of the lamp was 30 mW/cm², and the resin was exposed to the radiation for 60 seconds at a maximum UV exposure of 1800 mJ/cm² for the dot with the highest light intensity. The thickness of each printed dot was then measured with a micro-caliper to obtain a relationship of cure depth in dependency to the UV exposure.

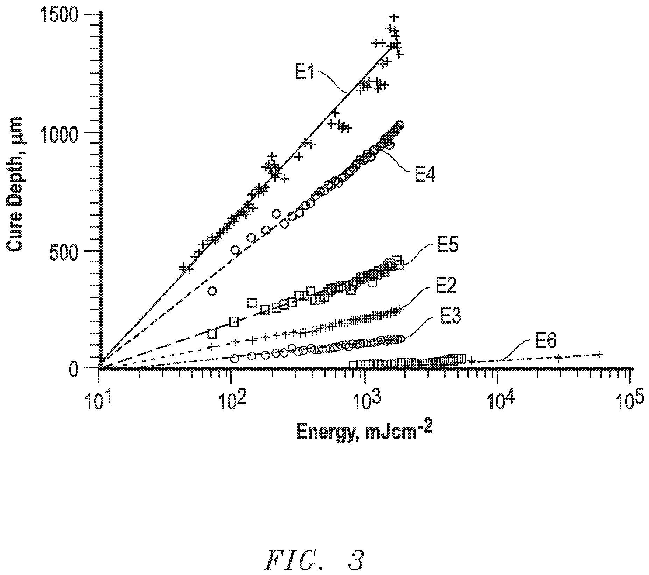

As can be seen in Table 2 and **FIG. 3**, the presence of ceramic particles (samples E2 to E7) resulted in a much lower cure depth in comparison to the cure depth of the mixture containing no ceramic particles (E1). It can be further seen that there are large differences between the tested mixtures. The highest cure depth was observed for the silica comprising slurries, followed by slurries containing MMA, alumina, zirconia and silicon carbide.

**Table 2: Cure depth with varying UV exposure for different mixtures**

| **UV Exposure [mJ/cm2]** | **Cure depth [µm]** | | | | | | |
|---|---|---|---|---|---|---|---|
| | **E1** | **E2** | **E3** | **E4** | **E5** | **E6** | **E7** |
| 247 | 800 | 140 | 66 | 608 | 269 | - | - |
| 388 | 940 | 160 | 86 | 695 | 327 | 40 | - |
| 529 | 900 | 180 | 86 | 770 | 322 | - | - |
| 671 | 1010 | 190 | 94 | 803 | 349 | - | - |
| 812 | 980 | 200 | 98 | 847 | 354 | - | - |
| 953 | 1190 | 210 | 105 | 878 | 376 | 50 | - |
| 1094 | 1210 | 210 | 111 | 898 | 389 | - | - |
| 1235 | 1210 | 220 | 111 | 927 | 398 | - | - |
| 1376 | 1280 | 230 | 116 | 958 | 414 | - | - |
| 1518 | 1430 | 230 | 118 | 949 | 436 | - | - |
| 1659 | 1420 | 240 | 120 | 1000 | 443 | - | - |
| 1800 | 1320 | 250 | 125 | 1022 | 439 | 59 | - |
| 2700 | - | - | - | - | - | 60 | <1 |
| 3600 | - | - | - | - | - | 66 | - |
| 5400 | - | - | - | - | - | 70 | 1 |

It can be further seen from **FIG. 3** that the increase in cure depth is linear to the logarithms of the applied radiation energy for all mixtures. The slope of the straight lines for each mixture can be correlated to the curing sensitivity Dₚ of the mixtures with regard to UV exposure.

Table 3 shows the curing sensitivity Dₚ values obtained from the slopes of **FIG. 3** with regard to the refractive index of the ceramic materials of the mixtures. Not to be bound by theory, the sensitivity values Dp indicate that the curing sensitivity of the mixtures decreases with increasing scattering of the particles and strongly relates to the refractive index of the ceramic particles.

**Table 3:**

| **Example** | **Ceramic Particles** | | **Sensitivity Dₚ [µm]** | **Refractive Index** | **Particle Size** | **Particle Amount [vol%]** | **SSA** |
|---|---|---|---|---|---|---|---|
| E1 | - | | 249 | 1.5* | | | |
| E4 | Silica | | 192 | 1.5‡ | 1700 nm | 30 | 2 |
| E3 | MMA | | 85 | 1.7‡ | 3000 nm | 28 | <1 |
| E2 | Alumina | | 49 | 1.8‡ | 500 nm | 35 | 7 |
| E5 | Zirconia | | 29 | 2.2‡ | 300 nm | 27.6 | 7 |
| * Monomer | | ‡ Ceramic particles | | | | | |

### Example 2

Radiation curable mixtures with and without Al₂O₃ (E4 and E1), have been further compared by measuring the thickness of the inhibition zone for each sample with increasing UV exposure.

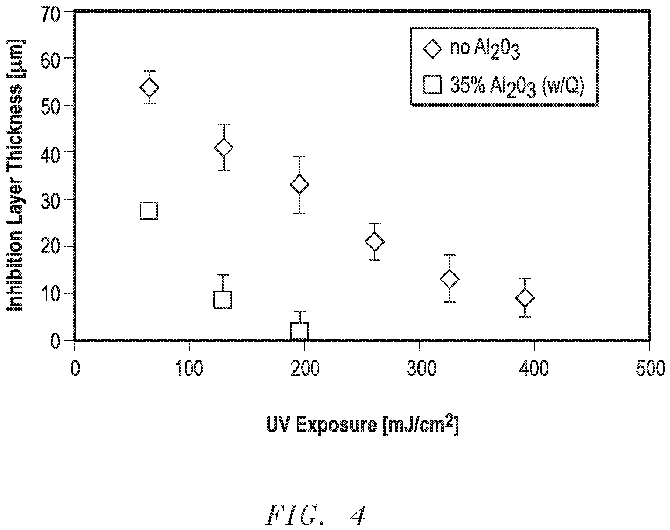

As can be see in Table 4 and **FIG. 4**, the presence of 35 vol% Al₂O₃ lowered the thickness of the inhibition zone to a large extent in comparison to the thickness of the inhibition zone of mixture not containing Al₂O₃.

**Table 4**

| **UV-Exposure [mJ/cm²]** | **Thickness of Inhibition Zone [µm] no Al₂O₃** | **Thickness of Inhibition Zone [µm] 35 vol% Al₂O₃** |
|---|---|---|
| 65 | 54 | 26 |
| 130 | 41 | 11 |
| 195 | 33 | 2 |
| 260 | 21 | - |
| 325 | 13 | - |
| 390 | 9 | - |

It could further be observed that the amount of ceramic particles and the applied UV exposure needed to be carefully balanced in order to create an inhibition zone which can prevent adsorption of cured mixture on the bottom surface of the chamber. At a UV-exposure at 260 mJ/cm² or higher, the alumina containing slurries did not establish a functioning inhibition zone, and the radiation cured mixture was sticking to the bottom surface of the micro-chamber.

### Example 3

Two different types of oxygen permeable membranes - AF-2400X and PMP - were compared regarding their influence on the thickness of a formed inhibition zone under otherwise equal conditions. AF-2400X is an oxygen permeable Teflon membrane made by Biogeneral, and PMP is a polymethylpentene based membrane, also called TPX, made by MITSUI Chemicals. Both membranes had a thickness of 0.056 mm (2.2 mils).

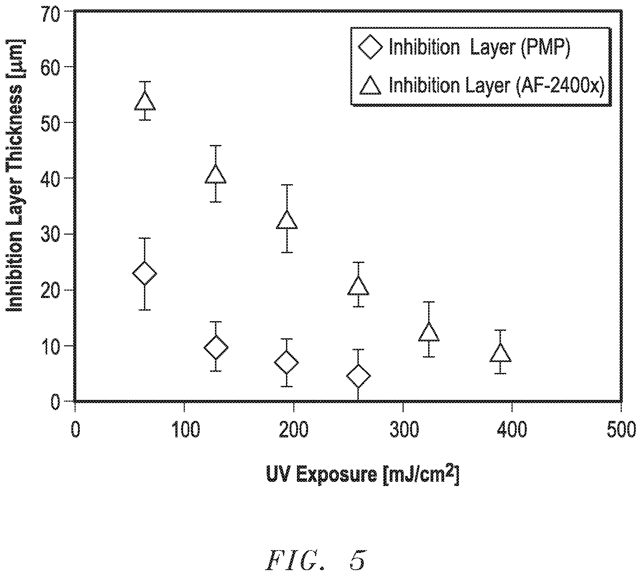

For the experiments, the radiation curable material of Example 1 (SARTOMER^{™} SR238) was used without the inclusion of Al₂O₃. As can be seen in Table 5 and FIG 5, in the presence of the AF-2400X membrane, the formed inhibition zone is much larger than the inhibition zone created when using a PMP membrane. This indicates that AF-2400X allows the penetration of higher amounts of oxygen in comparison to PMP membrane.

**Table 5:**

| **UV-Exposure [mJ/cm²]** | **Thickness of Inhibition Zone [µm]** | **Thickness of Inhibition Zone [µm]** |
|---|---|---|
| | **PMP** | **AF-2400X** |
| 64.9 | 24 | 54 |
| 129.8 | 22 | 41 |
| 194.8 | 10 | 33 |
| 259.7 | 7 | 21 |

### Example 4

Continuous forming of a three-dimensional body comprising Al₂O₃
A mixture was prepared containing 20 vol% Al₂O₃ (ALMATIS^{™} A16, which was ball milled the same way as described in Example 1), 45.2 vol% radiation curable monomer (SARTOMER^{™} SR 238), 30 vol% radiation curable oligomer (FORMLAB^{™} resin clear), 0.3 vol% of a photo initiator (IRGACURE^{™} 819), and 4.5 vol% dispersant (DISPERBYK^{™}-111).

The mixture was placed in a chamber of an assembly having a similar design as shown in **FIG. 1A and FIG. 1B****.** The transparent window of the chamber was made of oxygen permeable Teflon (AF-2400X) with a thickness of 0.056 mm (2.2 mils).

As electromagnetic radiation unit was used a lensed LED device including an array of 12 UV LEDs, each LED having a maximum optical power of 5.6 Watt and a UV wavelength maximum at 405 nm, and positioned below the transparent window of the chamber. On the outer surface of the transparent window was placed a mask having a round opening with a 3 mm inner diameter.

A carrier plate attached to a vertically movable construction was placed into the mixture of the chamber at a distance of about 10 µm above the surface of the transparent window. The mixture was radiated with the UV LEDs, and with a minor time delay of about 1 to 2 seconds, the carrier plate was started to continuously move upwards, pulling a rod-shaped body out of the mixture. The experiment was repeatedly conducted at different continuous forming speeds, such as 30 mm/hour, 60 mm/hour, and 90 mm/hour, as well as at different UV exposures (see Table 6).

**Table 6:**

| **Forming Speed [mm/hour]** | **UV Power [mW/cm²]** |
|---|---|
| 30 | 1.12 |
| 60 | 1.12 |
| 90 | 0.56 |

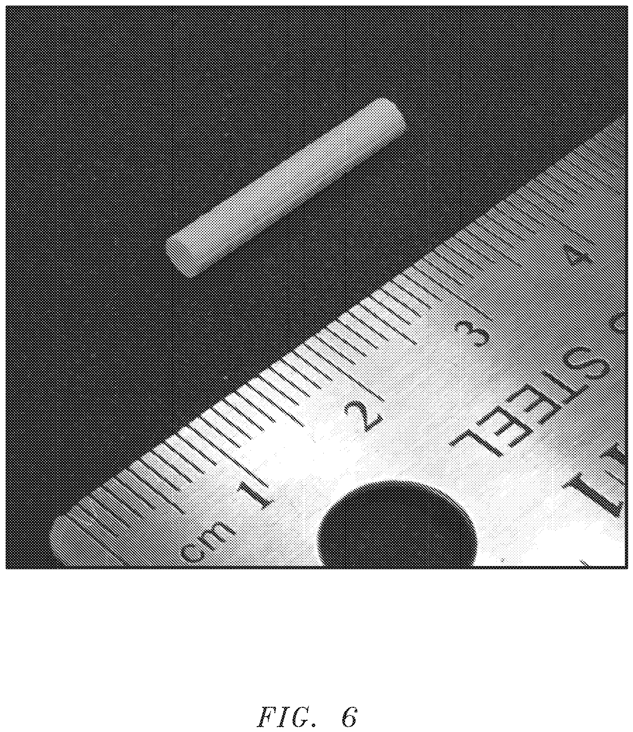

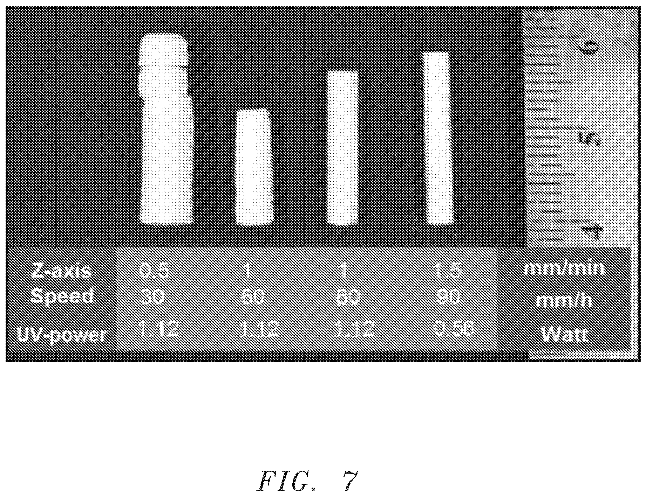

A picture of the rod-shaped body formed at a speed of 1.5 mm/min and a UV power of 0.56 Watt is shown in **FIG 6****.** A comparison of the formed three-dimensional bodies at different radiation power and different forming speed can be seen in **FIG 7****.** The best quality could be obtained at the highest forming speed of 90 mm/hour and the lower power of 0.56 mW/cm².

### Example 5

Forming a three-dimensional body having regions of different densities.

Alumina powder (Almatis Gilox 63) was fractionated to a fraction having a particle size larger then 20 microns. A mixture was prepared including the fractionated alumina powder (> 20 microns) in an amount of 164.6 g (35 vol% based on the total weight of the mixture), radiation curable resin monomer (1,6 hexanediol diacrylate (SARTOMER^{™} SR238)) in an amount of 72.82 g, a photoinitiator (IRGACURE^{™} 819) in an amount of 1.44 g, and a dispersion agent (DISPERBYK^{™} 111) in an amount of 6.27 g.

A cylindrical body was continuously formed according to the same method and system as described in Example 4. The body was formed at a speed of 30 mm/hour, and with two different applied radiation intensities: 1.08 mW/cm² and 2.16 mW/cm². In independent measurements it was confirmed that under the process conditions, a radiation power of 1.08 mW/cm² an inhibition zone with a thickness of about 30 µm was formed, while a radiation power of 2.16 mW/cm² decreased the thickness of the inhibition zone to about 10 µm.

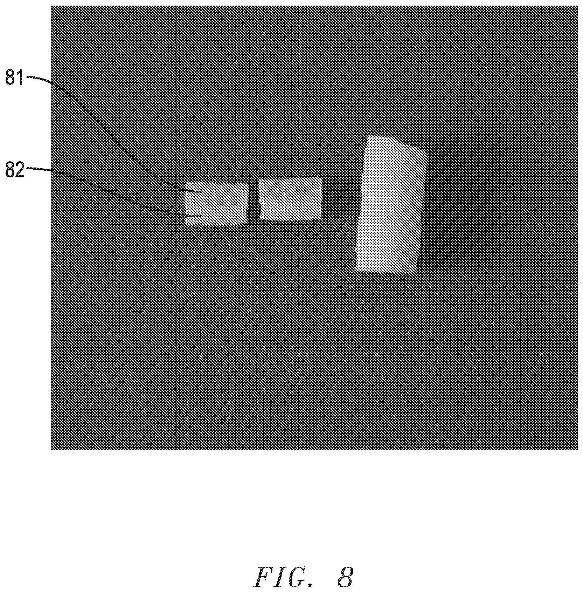

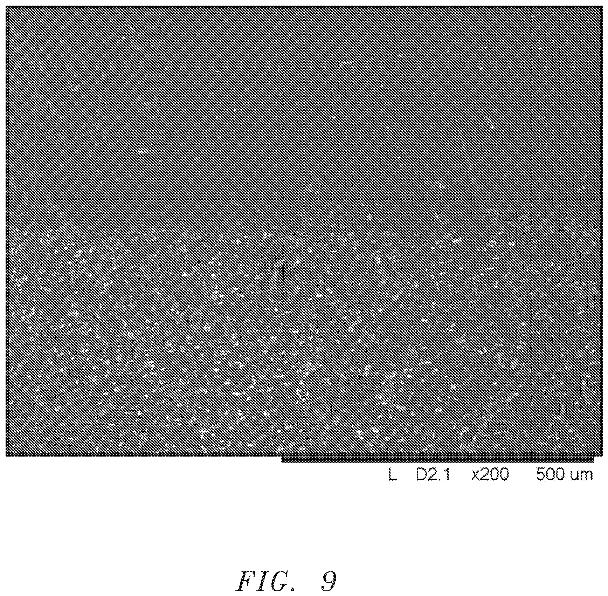

Corresponding to the different radiation intensities, a body was formed with regions of different densities: at the higher radiation intensity (2.16 mW/cm²), regions were formed comprising alumina particles, and at the lower intensity (1.08 mW/cm²), regions were formed being essentially free of alumina particles. The regions containing the alumina particles had a density of 1.52 g/cm³ , and the regions being nearly free of alumina particles had a density of 1.34 g/cm³ (see also summary table 7, and **FIG. 8**). In **FIG. 8**, the region comprising alumina particles is indicated with numeral **81**, and the region being nearly free of alumina particles is indicated with numeral **82.** An SEM image showing the change in the microstructure between the two different types of regions can be seen in **FIG. 9****.** It can be clearly seen that the bottom half of the image is the high-density region comprising in a high amount alumina particles, while the upper half of the image shows a region nearly without alumina particles. The example demonstrates that by varying the thickness of the inhibition zone (by varying the applied UV power) and selecting a suitable forming speed and ceramic particle size, size exclusion of ceramic particles during forming of the three-dimensional body is possible, and regions with different densities can be continuously formed.

**Table 7**

| **Applied UV power [mW/cm²]** | **Material of formed region** | **Density of formed region [g/cm³]** |
|---|---|---|
| 1.08 | Cured resin being essentially free of alumina particles | 1.34 |
| 2.16 | Alumina particles together with cured resin | 1.52 |

## Claims

1. A method for forming a body, comprising:
forming a three-dimensional body by electromagnetic radiation curing a mixture (16) comprising solid particles, wherein forming includes growth of the three-dimensional body from an interface (22) of the mixture (16), said interface (22) being between an inhibition zone (17) of the mixture (16) and the remaining part of the mixture (16), the inhibition zone (17) defined as a zone of the mixture (16) which is distinguished from the remaining part of the mixture (16) by the presence of an inhibitor in a concentration that avoids curing of the mixture (16) when exposed to radiation, and
forming at least one first region and at least one second region within the three-dimensional body by varying the thickness of the inhibition zone (17) and/or translating portion (19), such that solid particles of the mixture can be excluded according to their size from entering the translation portion (19); and
wherein the at least one first region having a different density than the at least one second region with a difference in density being at least 0.05 g/cm³; and
the at least one first region having a first content of the solid particles, and the at least one second region comprising a second content of the solid particles, the first content of the solid particles being different than the second content of the solid particles,
wherein the solid particles involved for forming the at least one first region have an average particle size (P1), and the solid particles involved for forming the at least one second region have an average particle size (P2), wherein P1>P2.

2. The method of claim 1,
wherein radiation curing is conducted within a translating portion (19) of the mixture (16), said translating portion (19) defined as a portion of the mixture (16) which is translated from liquid to solid state, and further
wherein, during forming of the three-dimensional body, a thickness of the translating portion (19) is varied and/or a thickness of the inhibition zone (17) of the mixture (16) is varied.

3. The method of claim 1,
wherein the solid particles of the mixture (16) define a multimodal particle size distribution.

4. The method of claims 1, 2, or 3, wherein forming includes continuous translation and growth of the three-dimensional body from the interface (22) of the mixture.

5. The method of claims 1, 2, or 3, wherein the solid particles of the mixture include at least one of ceramic particles, metallic particles, polymeric particles, or any combination thereof.

6. The method of claim 5, wherein the solid particles are ceramic particles, and the ceramic particles comprise at least one material selected from the group of an oxide, a carbide, a boride, a nitride, a silicide or any combination thereof.

7. The method of claims 1, 2, or 3, wherein the solid particles have an average particle size of at least 0.1 µm and not greater than 50 µm.

8. The method of claims 1, 2, or 3, wherein the at least one first region and the at least one second region comprise different materials of solid particles.

9. The method of claims 1, 2, or 3, wherein the at least one first region includes ceramic particles and the at least one second region is essentially free of ceramic particles.

10. The method of claims 1, 2, or 3, wherein the thickness of the inhibition zone (17) is varied by varying a power of the applied electromagnetic radiation within a range from 0.1 mW/cm² to not greater than 250 mW/cm².

11. The method of claims 1, 2, or 3, further including high temperature sintering at a temperature of at least 300°C and not greater than 1600°C.

12. The method of claim 11, wherein high temperature sintering removes the at least one first region of the three-dimensional body, and forms a ceramic body from the at least one second region.

13. The method of claim 3, wherein the multimodal particle size distribution is selected from the group of a bimodal, a trimodal, or a tetramodal particle size distribution.

14. The method of claim 1, wherein the at least one first region includes solid particles, and the at least one second region is essentially free of solid particles.

## Patentansprüche

1. Verfahren zum Bilden eines Körpers, umfassend:
Bilden eines dreidimensionalen Körpers durch elektromagnetisches Strahlungshärten eines Gemischs (16), das Feststoffpartikel umfasst, wobei das Bilden das Wachstum des dreidimensionalen Körpers von einer Grenzfläche (22) des Gemischs (16) aus einschließt, wobei sich die Grenzfläche (22) zwischen einer Hemmzone (17) des Gemischs (16) und dem verbleibenden Teil des Gemischs (16) befindet, wobei die Hemmzone (17) als eine Zone des Gemischs (16) definiert ist, die sich von dem verbleibenden Teil des Gemischs (16) durch das Vorhandensein eines Hemmstoffs in einer Konzentration unterscheidet, die das Aushärten des Gemischs (16) verhindert, wenn es einer Strahlung ausgesetzt wird, und
Bilden mindestens eines ersten Bereichs und mindestens eines zweiten Bereichs innerhalb des dreidimensionalen Körpers durch Variieren der Dicke der Hemmzone (17) und/oder eines Translationsabschnitts (19), so dass Feststoffpartikel des Gemischs je nach Größe vom Eindringen in den Translationsabschnitt (19) ausgeschlossen werden können; und
wobei der mindestens eine erste Bereich eine andere Dichte als der mindestens eine zweite Bereich aufweist, wobei der Dichteunterschied mindestens 0,05 g/cm³ beträgt; und
der mindestens eine erste Bereich einen ersten Gehalt an Feststoffpartikeln aufweist und der mindestens eine zweite Bereich einen zweiten Gehalt an Feststoffpartikeln umfasst, wobei der erste Gehalt an Feststoffpartikeln sich von dem zweiten Gehalt an Feststoffpartikeln unterscheidet,
wobei die an dem Bilden des mindestens einen ersten Bereichs beteiligten Feststoffpartikel eine durchschnittliche Partikelgröße (P1) aufweisen und die an dem Bilden des mindestens einen zweiten Bereichs beteiligten Feststoffpartikel eine durchschnittliche Partikelgröße (P2) aufweisen, wobei P1 > P2.

2. Verfahren nach Anspruch 1,
wobei das Strahlungshärten innerhalb eines Translationsabschnitts (19) des Gemischs (16) durchgeführt wird, wobei der Translationsabschnitt (19) als ein Abschnitt des Gemischs (16) definiert ist, der vom flüssigen in den festen Zustand überführt wird, und wobei ferner während des Bildens des dreidimensionalen Körpers eine Dicke des Translationsabschnitts (19) variiert wird und/oder eine Dicke der Hemmzone (17) des Gemischs (16) variiert wird.

3. Verfahren nach Anspruch 1,
wobei die Feststoffpartikel des Gemischs (16) eine multimodale Partikelgrößenverteilung definieren.

4. Verfahren nach den Ansprüchen 1, 2 oder 3, wobei das Bilden eine kontinuierliche Verschiebung und ein kontinuierliches Wachstum des dreidimensionalen Körpers von der Grenzfläche (22) des Gemischs aus umfasst.

5. Verfahren nach den Ansprüchen 1, 2 oder 3, wobei die festen Partikel des Gemischs mindestens eines von keramischen Partikeln, metallischen Partikeln, polymeren Partikeln oder einer Kombination davon umfassen.

6. Verfahren nach Anspruch 5, wobei die Feststoffpartikel Keramikpartikel sind und die Keramikpartikel mindestens ein Material umfassen, das aus der Gruppe eines Oxids, eines Carbids, eines Borids, eines Nitrids, eines Silizids oder einer beliebigen Kombination davon ausgewählt ist.

7. Verfahren nach den Ansprüchen 1, 2 oder 3, wobei die Feststoffpartikel eine durchschnittliche Partikelgröße von mindestens 0,1 µm und nicht größer als 50 µm aufweisen.

8. Verfahren nach den Ansprüchen 1, 2 oder 3, wobei der mindestens eine erste Bereich und der mindestens eine zweite Bereich unterschiedliche Materialien aus Feststoffpartikeln umfassen.

9. Verfahren nach den Ansprüchen 1, 2 oder 3, wobei der mindestens eine erste Bereich Keramikpartikel einschließt und der mindestens eine zweite Bereich im Wesentlichen frei von Keramikpartikeln ist.

10. Verfahren nach Anspruch 1, 2 oder 3, wobei die Dicke der Hemmzone (17) durch Variieren der Leistung der angewandten elektromagnetischen Strahlung in einem Bereich von 0,1 mW/cm² bis nicht mehr als 250 mW/cm² variiert wird.

11. Verfahren nach den Ansprüchen 1, 2 oder 3, das ferner ein Hochtemperatursintern bei einer Temperatur von mindestens 300 °C und nicht mehr als 1600 °C einschließt.

12. Verfahren nach Anspruch 11, wobei durch Hochtemperatursintern der mindestens eine erste Bereich des dreidimensionalen Körpers entfernt wird und aus dem mindestens einen zweiten Bereich ein Keramikkörper gebildet wird.

13. Verfahren nach Anspruch 3, wobei die multimodale Partikelgrößenverteilung aus der Gruppe einer bimodalen, einer trimodalen oder einer tetramodalen Partikelgrößenverteilung ausgewählt ist.

14. Verfahren nach Anspruch 1, wobei der mindestens eine erste Bereich Feststoffpartikel einschließt und der mindestens eine zweite Bereich im Wesentlichen frei von Feststoffpartikeln ist.

## Revendications

1. Procédé de formation d'un corps, comprenant :
la formation d'un corps tridimensionnel par durcissement par rayonnement électromagnétique d'un mélange (16) comprenant des particules solides, dans lequel la formation comporte la croissance du corps tridimensionnel à partir d'une interface (22) du mélange (16), ladite interface (22) étant située entre une zone d'inhibition (17) du mélange (16) et la partie restante du mélange (16), la zone d'inhibition (17) étant définie comme une zone du mélange (16) qui se distingue de la partie restante du mélange (16) par la présence d'un inhibiteur dans une concentration qui évite le durcissement du mélange (16) lors de son exposition à un rayonnement, et
la formation d'au moins une première région et d'au moins une seconde région à l'intérieur du corps tridimensionnel en faisant varier l'épaisseur de la zone d'inhibition (17) et/ou de la partie de translation (19), de telle sorte que des particules solides du mélange peuvent être exclues, en fonction de leur dimension, de l'entrée dans la partie de translation (19) ; et
dans lequel l'au moins une première région a une densité différente de l'au moins une seconde région, une différence de densité étant d'au moins 0,05 g/cm³ ; et
l'au moins une première région ayant une première teneur en particules solides, et l'au moins une seconde région comprenant une seconde teneur en particules solides, la première teneur en particules solides étant différente de la seconde teneur en particules solides,
dans lequel les particules solides impliquées dans la formation de l'au moins une première région ont une dimension moyenne des particules (P1), et les particules solides impliquées dans la formation de l'au moins une seconde région ont une dimension moyenne des particules (P2), dans lequel P1 > P2.

2. Procédé selon la revendication 1,
dans lequel le durcissement par rayonnement est effectué dans une partie de translation (19) du mélange (16), ladite partie de translation (19) étant définie comme une partie du mélange (16) qui est translatée de l'état liquide à l'état solide, et en outre dans lequel, pendant la formation du corps tridimensionnel, une épaisseur de la partie de translation (19) varie et/ou une épaisseur de la zone d'inhibition (17) du mélange (16) varie.

3. Procédé selon la revendication 1,
dans lequel les particules solides du mélange (16) définissent une distribution multimodale de la dimension des particules.

4. Procédé selon les revendications 1, 2 ou 3, dans lequel la formation comporte une translation et une croissance continues du corps tridimensionnel à partir de l'interface (22) du mélange.

5. Procédé selon les revendications 1, 2 ou 3, dans lequel les particules solides du mélange comportent au moins l'une parmi des particules céramiques, des particules métalliques, des particules polymères ou leur combinaison quelconque.

6. Procédé selon la revendication 5, dans lequel les particules solides sont des particules céramiques, et les particules céramiques comprennent au moins un matériau choisi dans le groupe constitué d'un oxyde, d'un carbure, d'un borure, d'un nitrure, d'un siliciure ou de leur combinaison quelconque.

7. Procédé selon les revendications 1, 2 ou 3, dans lequel les particules solides ont une dimension moyenne des particules d'au moins 0,1 µm et d'au plus 50 µm.

8. Procédé selon les revendications 1, 2 ou 3, dans lequel l'au moins une première région et l'au moins une seconde région comprennent des matériaux différents de particules solides.

9. Procédé selon les revendications 1, 2 ou 3, dans lequel l'au moins une première région comporte des particules de céramique et l'au moins une seconde région est essentiellement exempte de particules de céramique.

10. Procédé selon les revendications 1, 2 ou 3, dans lequel l'épaisseur de la zone d'inhibition (17) varie en faisant varier une puissance du rayonnement électromagnétique appliqué dans une plage comprise entre 0,1 mW/cm² et au plus 250 mW/cm².

11. Procédé selon les revendications 1, 2 ou 3, comportant en outre un frittage à haute température à une température d'au moins 300 °C et d'au plus 1 600 °C.

12. Procédé selon la revendication 11, dans lequel le frittage à haute température enlève l'au moins une première région du corps tridimensionnel et forme un corps en céramique à partir de l'au moins une seconde région.

13. Procédé selon la revendication 3, dans lequel la distribution multimodale de la dimension des particules est choisie dans le groupe constitué d'une distribution bimodale, d'une distribution trimodale ou d'une distribution tétramodale de la dimension des particules.

14. Procédé selon la revendication 1, dans lequel l'au moins une première région comporte des particules solides, et l'au moins une seconde région est essentiellement exempte de particules solides.
